# EUROPÄISCHE PATENTSCHRIFT

(11) **EP 2 027 519 B1**
(45) Veröffentlichungstag und Bekanntmachung des Hinweises auf die Patenterteilung: **22.05.2013**
(21) Anmeldenummer: 07722348.5
(22) Anmeldetag: 03.05.2007
(51) Int. Cl.: G05D 7/06, F23N 3/00, F23D 1/00, F23N 5/00, F23L 9/04

(54) **VERFAHREN UND ANORDNUNG ZUR LUFTMENGEN-REGELUNG EINES MIT FOSSILEN, FESTEN BRENNSTOFFEN BETRIEBENEN VERBRENNUNGSSYSTEMS**
METHOD AND ARRANGEMENT FOR AIR QUANTITY REGULATION OF A COMBUSTION SYSTEM WHICH IS OPERATED WITH SOLID FOSSIL FUELS
PROCÉDÉ ET AGENCEMENT POUR LA RÉGULATION DE LA QUANTITÉ D'AIR D'UN SYSTÈME DE COMBUSTION FONCTIONNANT AVEC DES COMBUSTIBLES FOSSILES SOLIDES

(30) Priorität: 12.05.2006 DE 102006022657
(43) Veröffentlichungstag der Anmeldung: 25.02.2009
(73) Patentinhaber: Alstom Technology Ltd, 5401 Baden (CH)
(72) Erfinder: BRÜGGEMANN, Hellmuth, 73732 Esslingen a. N. (DE); WEISENBURGER, Michael, 70191 Stuttgart (DE)
(74) Vertreter: Rüger, Barthelt & Abel
(86) Internationale Anmeldenummer: PCT/DE2007/000791
(87) Internationale Veröffentlichungsnummer: WO 2007/131472

(56) Entgegenhaltungen:
- EP-A- 0 971 169
- DE-A1- 19 514 302
- US-A- 4 622 922
- US-A- 5 020 454
- US-A- 5 280 756
- US-A- 5 626 085

## Beschreibung

Die Erfindung bezieht sich auf ein Verfahren und eine Anordnung zur Luftmengen-Regelung eines mit fossilen, festen Brennstoffen betriebenen Verbrennungssystems.

Verfahren sowie Anordnungen zur Luftmengen-Regelung eines mit fossilen, festen Brennstoffen betriebenen Verbrennungssystems sind für verschiedene Anwendungszwecke bekannt. Das vorliegende Verbrennungssystem weist eine vertikale Brennkammer mit wenigstens einem Kohlenstaubbrenner im unteren Bereich der Brennkammer und mit wenigstens einer Ausbrandluftebene im oberen Bereich der von unten nach oben von Verbrennungs- bzw. Rauchgasen durchströmten Brennkammer auf.

Derartige Verbrennungssysteme werden beispielsweise in braunkohle- oder steinkohlegefeuerten Dampferzeugern großer Bauweise (größer 100 MWₑₗ) eingesetzt, deren Luftmengenregelung derart ausgebildet ist, dass die Brennerluftmenge und die Ausbrandluftmenge in Abhängigkeit der Feuerungs- bzw. Brennerleistung, d.h. der durch den Kohlenstaubbrenner durchgesetzten heizwertkorrigierten Brennstoffmenge, vorgesteuert wird. Die vorgesteuerte Brennerluffmenge wird durch einen O₂-Regler korrigiert, der einen bestimmten O₂-Gehalt im Rauchgas vor Luvo (Luftvorwärmer), d.h. rauchgasströmungsseitig stromaufwärts des Luvo, regelt. Dem O₂-Regler kann ein CO-Regler übergeordnet sein, der den O₂-Sollwert des O₂-Reglers anhebt, falls die CO-Emission hoch ist und entsprechend den O₂-Sollwert absenkt, falls die CO-Emission niedrig ist.

Ein derartiges System ist in US 4622 922 beschrieben.

Bei großen Dampferzeugern sind die CO-Emissionen systembedingt aufgrund der hohen Verweilzeiten in der Brennkammer sehr gering, und gehen bei hohen Luftzahlen λ, d.h. bei einem hohen Verhältnis der Luft gegenüber dem zu verbrennenden Brennstoff, an der Oberkante Kohlenstaubbrenner zum Teil gegen Null. Eine Fahrweise mit nennenswerten CO-Emissionen würde hier bedeuten, dass die Brennerzone sehr luftarm betrieben wird. Dies führt zwar zu geringen NOx-Emissionen, die luftarme Fahrweise kann jedoch in Abhängigkeit der Kohlequalität unerwünscht und nachteilig sein, da verstärkte Verschlackungen an den Rohrwänden der Brennkammern der Dampferzeuger entstehen können und/oder Korrosionsangriffe auf die Rohrwände der Brennkammern der Dampferzeuger erfolgen können.

Aufgabe der Erfindung ist es nun, ein Verfahren zur Luftmengen-Regelung eines mit fossilen, festen Brennstoffen betriebenen Verbrennungssystems zu schaffen, das die vorgenannten Nachteile vermeidet. Insbesondere ist es Aufgabe der Erfindung, ein Verfahren zur Luftmengen-Regelung eines mit fossilen, festen Brennstoffen betriebenen Verbrennungssystems zu schaffen, in dessen Verbrennungssystem verschlackungskritischer Brennstoff verbrannt wird bei gleichzeitiger weitgehendster Vermeidung von Verschlackungen und/oder Korrosionsangriffen an den Dampferzeuger-Brennkammerrohrwänden sowie bei gleichzeitiger Einhaltung der gesetzlichen NOx-Emissionswerte. Es ist des weiteren eine Aufgabe der Erfindung, eine Anordnung zur Luftmengen-Regelung vorzuschlagen.

Die vorstehend genannte Aufgabe wird hinsichtlich des Verfahrens durch die Merkmale des Patentanspruches 1 und hinsichtlich der Anordnung durch die Merkmale des Patentanspruches 7 gelöst.

Vorteilhafte Ausgestaltungen der Erfindung sind den Unteransprüchen zu entnehmen.

Durch die erfindungsgemäße Lösung wird ein Verfahren und eine Anordnung zur Luftmengen-Regelung eines mit fossilen, festen Brennstoffen betriebenen Verbrennungssystems geschaffen, das die nachfolgenden Vorteile aufweist:
- Verbesserung des Verschmutzungs- und Verschlackungsverhaltens an Brennkammerrohrwänden und Nachschaltheizflächen des Dampferzeugers,
- Verhinderung von Brennkammerrohrwandkorrosionen,
- Erhöhung der Verfügbarkeit und der Reisezeit des Dampferzeugers.

Eine vorteilhafte Ausbildung der Erfindung sieht vor, dass eine Korrektur des O₂-Sollwertes des O₂-Reglers durch einen CO-Regler bei Über- oder Unterschreitung des CO-Sollwertes im Rauchgas erfolgt. Damit ist gewährleistet, dass im Falle von erhöhten CO-Werten ausreichend Verbrennungsluft bereit gestellt wird.

In vorteilhafter Ausgestaltung der Erfindung wird für die Korrektur der durch den O₂-Regler vorbestimmten Brennerluftmenge durch einen NOx-Regler der NOx-Tagesmittelwert berücksichtigt. Durch diese Maßnahme fließt neben dem aktuellen NOx-Istwert noch der NOx-Tagesmittelwert ein und die Luftmengen-Regelung des Verbrennungssystems wird vergleichmäßigt.

In vorteilhafter Ausbildung der Erfindung wird die reduzierte oder erhöhte Teilluftmenge Δ_{Luft} durch einen Anteilsteller auf die zwei Ausbrandluftebenen aufgeteilt. In weiterer vorteilhafter Ausbildung kann die reduzierte oder erhöhte Teilluftmenge Δ_{Luft} im Verhältnis von 0 bis 100% auf die beiden Ausbrandluftebenen aufgeteilt werden. Vorteile dieser Maßnahmen sind, dass gefundene Betriebsoptimierungen fest eingestellt werden können.

Vorteilhaft kann es ferner sein, dass bei Korrektur der Brennerluftmenge und der Ausbrandluftmenge durch den NOx-Regler oder bei Korrektur des O₂-Sollwertes des O₂-Reglers durch den NOx-Regier der O₂-Regler neben der Einwirkung auf die Brennerluftmenge anteilig auch auf die Ausbrandluftmenge einwirkt. Durch diese Maßnahme wird erreicht, dass gefundene Betriebsoptimierungen fest eingestellt werden können.

Nachstehend sind Ausführungsbeispiele der Erfindung an Hand der Zeichnungen und der Beschreibung näher erläutert.

Es zeigt:
- Fig. 1: schematisch dargestellt einen Längsschnitt durch einen Dampferzeuger, der ein erfindungsgemäßes Verbrennungssystem aufweist sowie mit Komponenten, die rauchgasseitig zwischen Dampferzeuger und Atmosphäre liegen,
- Fig. 2: wie Figur 1, jedoch mit zwei Ausbrandluftebenen,
- Fig. 3: eine Prinzip-Regelstruktur des erfindungsgemäßen Luftmengenregelungsverfahrens
- Fig. 4: wie Figur 3, jedoch alternatives Regelverfahren.

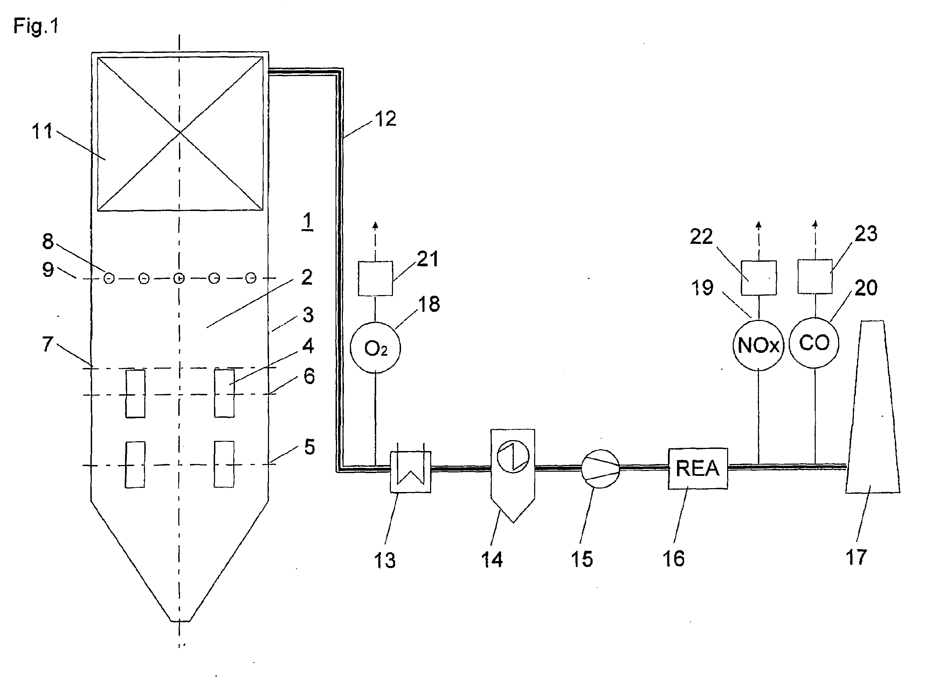

Das erfindungsgemäße Verfahren bzw. Anordnung zur Luftmengen-Regelung eines mit fossilen, festen Brennstoffen betriebenen Verbrennungssystems wird in der Regel in großen braunkohle- oder steinkohlebefeuerten Dampferzeugern mit einer Leistung größer 100 MWₑₗ eingesetzt, insbesondere bei mit verschlackungskritischen Brennstoffen befeuerten Dampferzeugern. Figur 1 zeigt im Längsschnitt einen Dampferzeuger 1 mit einem derartigen Verbrennungssystem auf. Der Dampferzeuger 1 weist eine vertikale, in der Regel im Querschnitt rechteckige Brennkammer 2 auf, die im wesentlichen allseits von Rohrwänden umschlossen ist, die somit die Brennkammerwände 3 bilden. Im unteren Bereich der Brennkammer 2 sind in den Brennkammerecken und/oder in den Brennkammerwänden 3 Kohlenstaubbrenner 4 zur Verbrennung des fossilen, festen Brennstoffes angeordnet. In Figur 1 sind beispielhaft zwei Brennerebenen 5, 6 mit jeweils zwei Kohlenstaubbrenner 4 in jeder der vier Brennkammerwände 3 angeordnet. Im oberen Bereich der Brennkammer 2, d.h. verbrennungs- bzw. rauchgasseitig stromabwärts der Kohlenstaubbrenner 4 sind mehrere Ausbrandluftdüsen 8 auf einer Ausbrandluftebene 9 angeordnet.

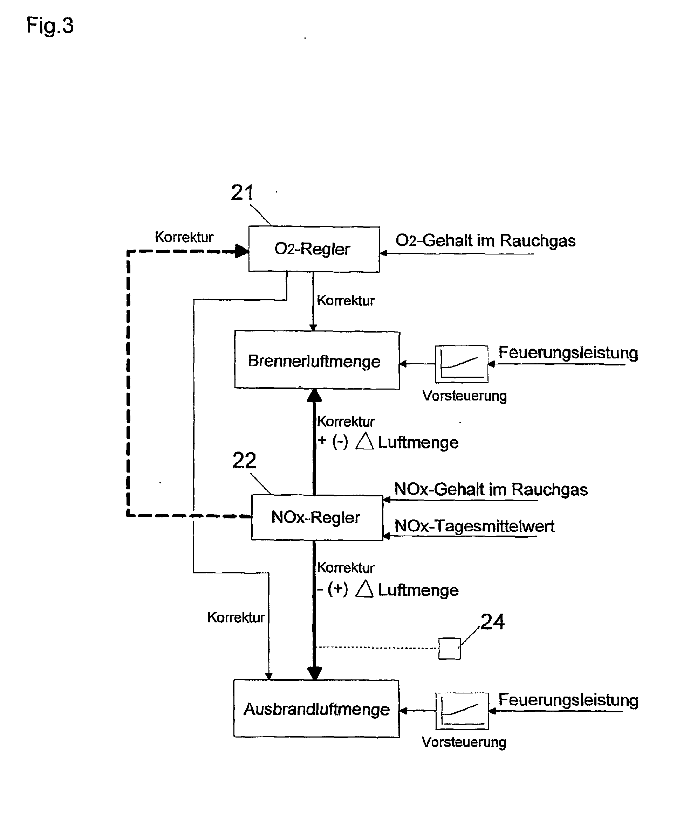

Das erfindungsgemäße Verfahren zur Luftmengen-Regelung eines mit fossilen, festen Brennstoffen betriebenen Verbrennungssystems sieht nunmehr die Zuführung einer Brennerluftmenge zu den Kohlenstaubbrennern 4 und einer Ausbrandluftmenge zu den Luftdüsen 8 der Ausbrandluftebene 9 vor, wobei die Brennerluftmenge und die Ausbrandluftmenge in Abhängigkeit der aktuellen Brenner- bzw. Feuerungsleistung vorgesteuert wird und eine Korrektur der vorgesteuerten Brennerluftmenge durch einen O₂-Regler 21 bei Über- oder Unterschreitung des O₂-Sollwertes im Rauchgas erfolgt. Es sieht ferner eine Korrektur der durch den O₂-Regler 21 vorbestimmten Brennerluftmenge durch einen NOx-Regler 22 vor, der bei Unterschreitung eines unteren NOx-Sollwertes im Rauchgas die Brennerluffmenge zu den Brennern 4 hin um eine Teilluftmenge Δ_{Luft} erhöht und die Ausbrandluftmenge zu der Ausbrandluftebene 9 hin um diese Teilluftmenge Δ_{Luft} reduziert und der bei Überschreitung eines oberen NOx-Sollwertes im Rauchgas die Brennerluftmenge zu den Brennern 4 hin um eine Teilluftmenge Δ_{Luft} reduziert und die Ausbrandluftmenge zu der Ausbrandluftebene 9 hin um diese Teilluftmenge Δ_{Luft} erhöht. Oder es sieht eine Korrektur des O₂-Sollwertes des O₂-Reglers 21 durch den NOx-Regler 22 vor, der bei Unterschreitung eines unteren NOx-Sollwertes im Rauchgas den O₂-sollwert anhebt und damit die Brennerluftmenge zu den Brennern 4 hin erhöht und der bei Überschreitung eines oberen NOx-Sollwertes im Rauchgas den O₂-Sollwert absenkt und damit die Brennerluftmenge zu den Brennern 4 hin reduziert. Figur 3 zeigt das vorgenannte Regelverfahren in Form einer Prinzip-Regelstruktur.

Durch das erfindungsgemäße Regelverfahren wird eine Betriebsweise des Verbrennungssystems erreicht, bei dem sich an der Oberkante Brenner 7 der Kohlestaubbrenner 4 eine möglichst hohe Luftzahl λ (Lambda) einstellt unter gleichzeitiger Einhaltung der gesetzlich vorgegebenen NOx-Emissionsgrenzwerte. Die Luftzahl λ an der Oberkante Brenner 7 kann beispielsweise 1,05 betragen, wobei die Luftzahl λ bekanntermaßen das Verhältnis der vorhandenen Luftmenge zu der für die stöchiometrische Verbrennung des Brennstoffes erforderlichen Luftmenge wiedergibt. Bei einer derart erhöhten Luftzahl λ kann bei der Verbrennung von verschmutzungs- bzw. verschlackungskritischen Kohlen bzw. Brennstoffen die Verschmutzungs- und Verschlackungsneigung an den Brennkammerrohrwänden 3 und den Nachschaltheizflächen 11 des Dampferzeugers 1 erheblich reduziert werden, so dass akzeptable Verfügbarkeiten und Reisezeiten des Dampferzeugers 1 erreicht werden. Bei Kohlen, die zum Korrosionsangriff auf die Brennkammerrohrwände 3 neigen, verbessert die hohe Luftzahl λ an der Oberkante Brenner 7 die Brennkammerrohrwandatmosphäre und schützt die Brennkammerrohrwände 3 vor Korrosion. Dies führt ebenfalls zu einer höheren Verfügbarkeit und Reisezeit der Anlage. Die Definition der Oberkante Brenner 7 ist dermaßen, dass bei Vorhandensein eines Kohlenstaubbrenners 4 die Oberkante Brenner 7 an dessen Oberkante zu finden ist, bei mehreren Kohlenstaubbrennern 4 bzw. mehreren Brennerebenen 5, 6 die Oberkante Brenner 7 an der Oberkante des bzw. der obersten Brenner 4 zu finden ist.

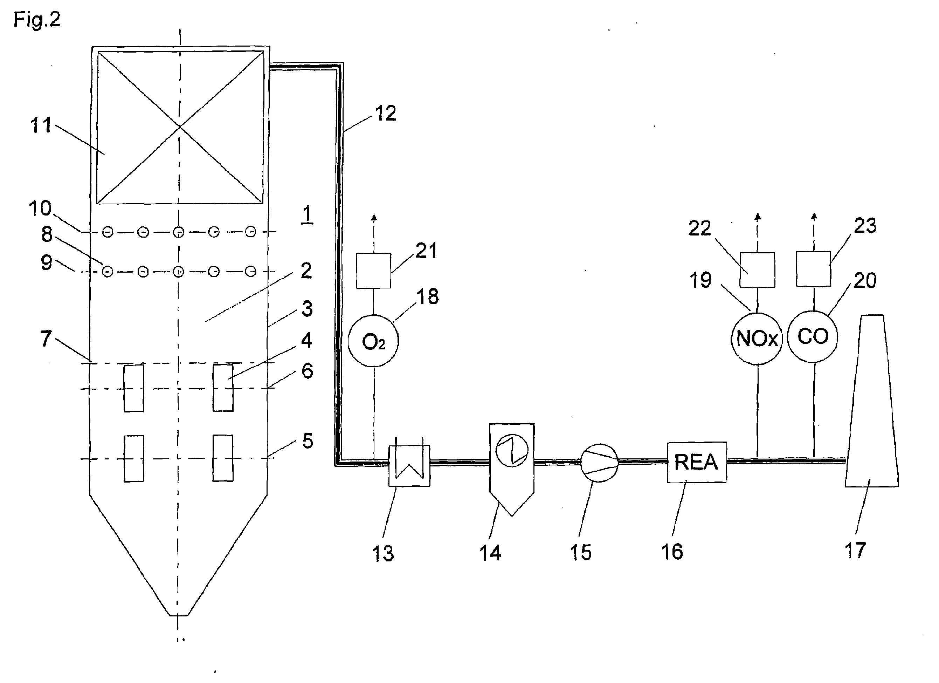

Die Messungen der Ist-Zustände der verschiedenen Abgas- bzw. Rauchgaswerte, z.B. O₂, CO, NOx, deren Ist-Werte dann von den jeweiligen Reglern 21, 22, 23 übernommen bzw. diesen zugeführt und von diesen verarbeitet werden, werden bezüglich O₂ in der Regel im Rauchgasstrom innerhalb des Rauchgaskanals 12 an der O₂-Meßstelle 18 strömungsseitig vor Luvo 13 (rauchgasseitig stromaufwärts des Luftvorwärmers 13) vorgenommen, der im Rauchgasweg zwischen Brennkammer 2 und dem Rauchgasaustritt in die Atmosphäre liegt und bezüglich der CO- und NOx-Emissionswerte in der Regel im Rauchgasstrom innerhalb des Rauchgaskanals 12 an der NOx-Meßstelle 19 und an der CO-Meßstelle 20 strömungsseitig vor dem Kamin bzw. Kühlturm 17 (rauchgasseitig stromaufwärts des Kamins bzw. Kühlturms) vorgenommen. Die Figuren 1 und 2 zeigen ferner die im Rauchgasweg zwischen Brennkammer 2 und Kamin bzw. Kühlturm 17 gelegenen Luvo 13, Filter 14, Saugzuggebläse 15 und Rauchgasentschwefelung (REA) 16 auf.

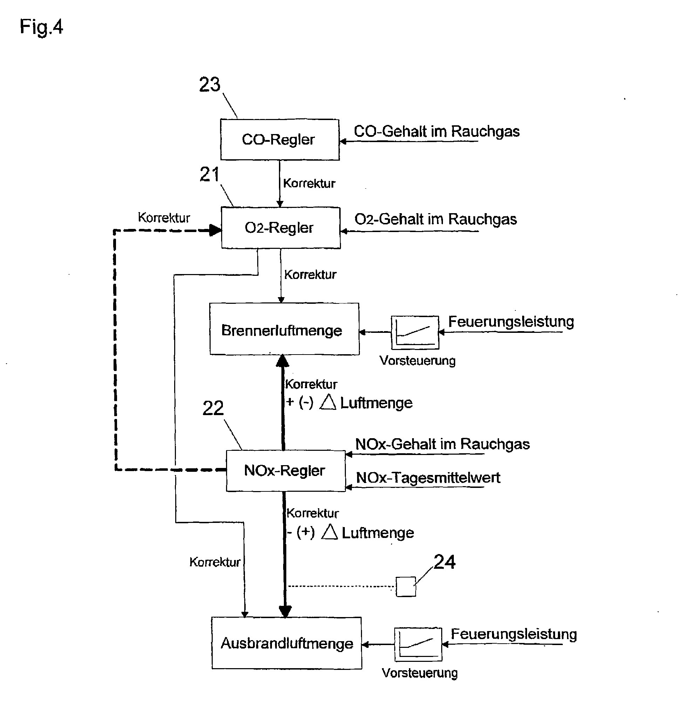

In der Regel sind bei großen Dampferzeugern 1 die CO-Emissionen systembedingt aufgrund der hohen Verweilzeiten in der Brennkammer 2 sehr gering und man kann entweder auf einen CO-Regler 23 ganz verzichten oder man installiert diesen und macht ihn inaktiv. Im Falle von kleineren Brennkammern 2 und höheren CO-Emissionen, kann ein derartiger CO-Regler 23 gemäß der Figur 4 zum Einsatz kommen bzw. ein inaktiver CO-Regler 23 aktiviert werden. Dabei wird durch den CO-Regler 23 der O₂- Sollwert des O₂-Reglers 21 korrigiert, wobei bei überschrittenem CO-Sollwert im Rauchgas der O₂-Sollwert angehoben und bei unterschrittenem CO-Sollwert im Rauchgas der O₂-Sollwert gesenkt wird. Damit können die CO- sowie die NOx-Emissionen innerhalb ihrer erlaubten Grenzwerte gehalten werden.

Das erfindungsgemäße Verfahren zur Luftmengen-Regelung eines mit fossilen, festen Brennstoffen betriebenen Verbrennungssystems kann vorteilhaft weitergebildet werden, indem für die Korrektur der durch den O₂-Regler 21 vorbestimmten Brennerluftmenge durch einen NOx-Regler 22 der NOx-Tagesmittelwert berücksichtigt wird.

Figur 2 zeigt einen Dampferzeuger 1 mit zwei Ausbrandluftebenen 1, 2 ( 9, 10 ). Da der NOx-Regler 22 erfindungsgemäß bei Unterschreitung eines unteren NOx-Sollwertes im Rauchgas die Brennerluftmenge zu den Brennern 4 hin um eine Teilluftmenge Δ_{Luft} (Delta Luft) erhöht und die Ausbrandluftmenge zu den Ausbrandluftebenen 9, 10 hin um dieselbe Teilluftmenge Δ_{Luft} reduziert bzw. bei Überschreitung eines oberen NOx-Sollwertes im Rauchgas die Brennerluftmenge zu den Brennern 4 hin um eine Teilluftmenge Δ_{Luft} reduziert und die Ausbrandluftmenge zu den Ausbrandluftebenen 9, 10 hin um dieselbe Teilluftmenge Δ_{Luft} erhöht, kann im Falle von zwei Ausbrandluftebenen 1, 2 ( 9, 10 ) die reduzierte bzw. die erhöhte Teilluftmenge Δ_{Luft} durch einen Anteilsteller 24 auf die zwei Ausbrandluftebenen 1, 2 ( 9, 10 ) aufgeteilt werden. Die Aufteilung der Teilluftmenge Δ_{Luft} auf die zwei Ausbrandluftebenen 1, 2 ( 9, 10 ) durch den Anteilsteller 24 kann im Verhältnis von 0 bis 100 % geschehen, d. h. dass beispielsweise die Ebene 1 ( 9 ) 0 % und die Ebene 2 ( 10 ) 100 % der Teilluftmenge Δ_{Luft} erhält oder die Ebene 1 ( 9 ) 60 % und die Ebene 2 ( 10 ) 40 % der Teilluftmenge Δ_{Luft} erhält.

Wird erfindungsgemäß die Brennerluftmenge und die Ausbrandluftmenge durch den NOx-Regler 22 korrigiert oder der O₂-Sollwert des O₂-Reglers 21 durch den NOx-Regler 22 korrigiert, dann kann der O₂-Regler 21 neben der erfindungsgemäßen Einwirkung auf die Brennerluftmenge auch noch auf die Ausbrandluftmenge einwirken (Figur 3 und 4).

Bei der für die Regelung der Brennerluftmenge herangezogenen aktuellen Brenner- bzw. Feuerungsleistung handelt es sich in der Regel um die Drehzahl eines nicht dargestellten Förderorganes, das dem Kohlenstaubbrenner 4 den Brennstoff zudosiert, wobei die Förderdrehzahl abhängig vom Brennstoffheizwert korrigiert wird. Bei gleicher Brenner- bzw. Feuerungsleistung erfordert ein Brennstoff mit schlechterem Heizwert somit eine höhere Drehzahl bzw. Fördergeschwindigkeit des Förderorganes.

Jede Ausbrandluftebene 9, 10 weist mehrere Luftdüsen 8 auf, die beispielsweise gleichmäßig über die Brennkammerrohrwände 3 verteilt sein können, um ein effizientes Einbringen der Ausbrandluft in das zum Teil noch nicht verbrannte Rauchgas zu gewährleisten. Durch die Einbringung von Ausbrandluft rauchgasseitig gesehen stromabwärts des eigentlichen Hauptverbrennungsvorganges, an dem die Brennerluftmenge eingebracht wird, werden noch unverbrannte Bestandteile (feste Partikel, Gase) weitestgehend verbrannt.

### Bezugszeichenliste:

| | |
|---|---|
| 1 | Dampferzeuger |
| 2 | Brennkammer |
| 3 | Brennkammerwand bzw. Brennkammerrohrwand |
| 4 | Kohlenstaubbrenner |
| 5 | Brennerebene, erste |
| 6 | Brennerebene, zweite |
| 7 | Oberkante Brenner |
| 8 | Ausbrandluftdüsen |
| 9 | Ausbrandluftebene, erste |
| 10 | Ausbrandluftebene, zweite |
| 11 | Nachschaltheizfläche |
| 12 | Rauchgaskanal |
| 13 | Luftvorwärmer (Luvo) |
| 14 | Filter |
| 15 | Saugzuggebläse |
| 16 | Rauchgasentschwefelungsanlage |
| 17 | Kamin bzw. Kühlturm |
| 18 | O₂-Meßstelle |
| 19 | NOx-Meßstelle |
| 20 | CO-Meßstelle |
| 21 | O₂-Regler |
| 22 | NOx-Regler |
| 23 | CO-Regler |
| 24 | Anteilsteller |

## Patentansprüche

1. Verfahren zur Luftmengen-Regelung eines mit fossilen, festen Brennstoffen betriebenen Verbrennungssystems, wobei das Verbrennungssystem eine vertikale Brennkammer mit wenigstens einem Kohlenstaubbrenner im unteren Bereich der Brennkammer und mit wenigstens einer Ausbrandluftebene im oberen Bereich der von unten nach oben von Verbrennungsgasen durchströmten Brennkammer aufweist, wobei das Verfahren umfasst
- Zuführung einer Brennerluftmenge zu dem/den Kohlenstaubbrenner(n) und einer Ausbrandluftmenge zu der/den Ausbrandluftebene(n), wobei die Brennerluftmenge und die Ausbrandluftmenge in Abhängigkeit der aktuellen Feuerungsleistung vorgesteuert wird,
- Korrektur der vorgesteuerten Brennerluftmenge durch einen O₂-Regler bei Über- oder Unterschreitung des O₂-Sollwertes im Rauchgas,
und wobei das Verfahren durch den folgenden Schritt gekennzeichnet ist:
- Korrektur der durch den O₂-Regler vorbestimmten Brennerluftmenge durch einen NOx-Regler, der bei Unterschreitung eines unteren NOx-Sollwertes im Rauchgas die Brennerluffmenge zu dem/den Brenner(n) hin um eine Teilluftmenge Δ_{Luft} erhöht und die Ausbrandluftmenge zu der/den Ausbrandluftebene(n) hin um diese Teilluftmenge Δ_{Luft} reduziert und der bei Überschreitung eines oberen NOx-Sollwertes im Rauchgas die Brennerluftmenge zu dem/den Brenner(n) hin um eine Teilluftmenge Δ_{Luft} reduziert und die Ausbrandluftmenge zu der/den Ausbrandluftebene(n) hin um diese Teilluftmenge Δ_{Luft} erhöht oder Korrektur des O₂-Sollwertes des O₂-Reglers durch den NOx-Regler, der bei Unterschreitung eines unteren NOx-Sollwertes im Rauchgas den O₂-Sollwert anhebt und damit die Brennerluftmenge zu dem/den Brenner(n) hin erhöht und der bei Überschreitung eines oberen NOx-Sollwertes im Rauchgas den O₂-Sollwert absenkt und damit die Brennerluftmenge zu dem/den Brenner(n) hin reduziert.

2. Verfahren nach Anspruch 1, **dadurch gekennzeichnet, dass** eine Korrektur des O₂-Sollwertes des O₂-Reglers durch einen CO-Regler bei Über- oder Unterschreitung des CO-Sollwertes im Rauchgas erfolgt.

3. Verfahren nach Anspruch 1, **dadurch gekennzeichnet, dass** für die Korrektur der durch den O₂-Regler vorbestimmten Brennerluftmenge durch einen NOx-Regler der NOx-Tagesmittelwert berücksichtigt wird.

4. Verfahren nach Anspruch 1, **dadurch gekennzeichnet, dass** bei vorhandenen zwei Ausbrandluftebenen die reduzierte oder erhöhte Teilluftmenge Δ_{Luft} durch einen Anteilsteller auf die zwei Ausbrandluftebenen aufgeteilt wird.

5. Verfahren nach Anspruch 4, **dadurch gekennzeichnet, dass** die reduzierte oder erhöhte Teilluffmenge Δ_{Luft} im Verhältnis von 0 bis 100% auf die beiden Ausbrandluftebenen aufgeteilt werden können.

6. Verfahren nach Anspruch 1, **dadurch gekennzeichnet, dass** bei Korrektur der Brennerluftmenge und der Ausbrandluftmenge durch den NOx-Regler oder bei Korrektur des O₂-Sollwertes des O₂-Reglers durch den NOx-Regler der O₂-Regler neben der Einwirkung auf die Brennerluftmenge anteilig auch auf die Ausbrandluftmenge einwirkt.

7. Anordnung zur Luftmengen-Regelung eines mit fossilen, festen Brennstoffen betriebenen Verbrennungssystems, wobei das Verbrennungssystem eine vertikale Brennkammer ( 2 ) mit wenigstens einem Kohlenstaubbrenner ( 4 ) im unteren Bereich der Brennkammer ( 2 ) und mit wenigstens einer Ausbrandluftebene ( 9, 10 ) im oberen Bereich der von unten nach oben von Verbrennungsgasen durchströmten Brennkammer ( 2 ) aufweist, wobei die Anordnung umfasst
- wenigstens einen Kohlenstaubbrenner ( 4 ), dem bzw. denen eine Brennerluftmenge zuführbar ist und wenigstens eine Ausbrandluftebene ( 9, 10 ), der/denen eine Ausbrandluftmenge zuführbar ist, wobei die Brennerluftmenge und die Ausbrandluftmenge in Abhängigkeit der aktuellen Feuerungsleistung vorgesteuert ist,
- einen O₂-Regler ( 21 ), der die vorgesteuerte Brennerluftmenge bei Über- oder Unterschreitung des O₂-Sollwertes im Rauchgas korrigiert,
und wobei die Anordnung durch die folgende Vorrichtung gekennzeichnet ist:
- einen NOx-Regler (22), der die durch den O₂-Regler (21) vorbestimmte Brennerluftmenge korrigiert, wobei er bei Unterschreitung eines unteren NOx-Sollwertes im Rauchgas die Brennerluftmenge zu dem/den Brenner(n) ( 4 ) hin um eine Teilluftmenge Δ_{Luft} erhöht und die Ausbrandluftmenge zu der/den Ausbrandluftebene(n) ( 9, 10 ) hin um diese Teilluftmenge Δ_{Luft} reduziert und wobei er bei Überschreitung eines oberen NOx-Sollwertes im Rauchgas die Brennerluftmenge zu dem/den Brenner(n) ( 4 ) hin um eine Teiluftmenge Δ_{Luft} reduziert und die Ausbrandluftmenge zu der/den Ausbrandluftebene(n) ( 9, 10 ) hin um diese Teilluftmenge Δ_{Luft} erhöht
oder einen NOx-Regler ( 22 ), der den O₂-Sollwert des O₂-Reglers ( 21 ) korrigiert, wobei er bei Unterschreitung eines unteren NOx-Sollwertes im Rauchgas den O₂-Sollwert anhebt und damit die Brennerluftmenge zu dem/den Brenner(n) ( 4 ) hin erhöht und wobei er bei Überschreitung eines oberen NOx-Sollwertes im Rauchgas den O₂-Sollwert absenkt und damit die Brennerluftmenge zu dem/den Brenner(n) ( 4 ) hin reduziert.

8. Anordnung nach Anspruch 7, **dadurch gekennzeichnet, dass** die Anordnung einen CO-Regler ( 23 ) umfasst, der den O₂-Sollwert des O₂-Reglers ( 21 ) bei Über- oder Unterschreitung des CO-Sollwertes im Rauchgas korrigiert.

9. Anordnung nach Anspruch 7, **dadurch gekennzeichnet, dass** die Anordnung einen Anteilsteller ( 24 ) umfasst, der bei vorhandenen zwei Ausbrandluftebenen ( 9, 10 ) die reduzierte oder erhöhte Teilluftmenge Δ_{Luft} auf die zwei Ausbrandluftebenen ( 9, 10) aufteilt.

## Claims

1. Method for air quantity regulation of a combustion system which is operated with solid fossil fuels, wherein the combustion system comprises a vertical combustion chamber with at least one pulverized coal burner in the lower region of the combustion chamber and with at least one burnout air level in the upper region of the combustion chamber, which is passed through by combustion gases flowing from bottom to top, wherein the method comprises
- supplying a quantity of burner air to the pulverized coal burner(s) and a quantity of burnout air to the burnout air level(s), wherein the quantity of burner air and the quantity of burnout air are pre-controlled in dependence on the firing output at the given time,
- correcting the pre-controlled quantity of burner air by an O₂ regulator when the O₂ setpoint value in the flue gas is exceeded or not reached,
and wherein the method is **characterized by** the following step:
- correcting the quantity of burner air predetermined by the O₂ regulator by an NOₓ regulator which, when a lower NOₓ setpoint value in the flue gas is not reached, increases the quantity of burner air to the burner(s) by a partial quantity of air Δₐᵢᵣ and reduces the quantity of burnout air to the burnout air level(s) by said partial quantity of air Δₐᵢᵣ and, when an upper NOₓ setpoint value in the flue gas is exceeded, reduces the quantity of burner air to the burner(s) by a partial quantity of air Δₐᵢᵣ and increases the quantity of burnout air to the burnout air level(s) by said quantity of partial air Δₐᵢᵣ,
or correcting the O₂ setpoint value of the O₂ regulator by the NOₓ regulator which, when a lower NOₓ setpoint value in the flue gas is not reached, raises the O₂ setpoint value, and thereby increases the quantity of burner air to the burner(s), and, when an upper NOₓ setpoint value in the flue gas is exceeded, lowers the O₂ setpoint value, and thereby reduces the quantity of burner air to the burner(s).

2. Method according to Claim 1, **characterized in that** a correction of the O₂ setpoint value of the O₂ regulator is performed by a CO regulator when the CO setpoint value in the flue gas is exceeded or not reached.

3. Method according to Claim 1, **characterized in that** the NOₓ daily average value is taken into consideration for the correction by an NOₓ regulator of the quantity of burner air predetermined by the O₂ regulator.

4. Method according to Claim 1, **characterized in that**, if there are two burnout air levels, the reduced or increased partial quantity of air Δₐᵢᵣ is divided between the two burnout air levels by a proportioner.

5. Method according to Claim 4, **characterized in that** the reduced or increased partial quantity of air Δₐᵢᵣ may be divided between the two burnout air levels in a ratio of from 0 to 100%.

6. Method according to Claim 1, **characterized in that**, when the quantity of burner air and the quantity of burnout air are corrected by the NOₓ regulator or when the O₂ setpoint value of the O₂ regulator is corrected by the NOₓ regulator, the O₂ regulator not only has an effect on the quantity of burner air but also a proportionate effect on the quantity of burnout air.

7. Arrangement for air quantity regulation of a combustion system which is operated with solid fossil fuels, wherein the combustion system comprises a vertical combustion chamber (2) with at least one pulverized coal burner (4) in the lower region of the combustion chamber (2) and with at least one burnout air level (9, 10) in the upper region of the combustion chamber (2), which is passed through by combustion gases flowing from bottom to top, wherein the arrangement comprises
- at least one pulverized coal burner (4), to which a quantity of burner air can be supplied, and at least one burnout air level (9, 10), to which a quantity of burnout air can be supplied, wherein the quantity of burner air and the quantity of burnout air are pre-controlled in dependence on the firing output at the given time,
- an O₂ regulator (21), which corrects the pre-controlled quantity of burner air when the O₂ setpoint value in the flue gas is exceeded or not reached,
and wherein the arrangement is **characterized by** the following device:
- an NOₓ regulator (22), which corrects the quantity of burner air predetermined by the O₂ regulator (21), wherein, when a lower NOₓ setpoint value in the flue gas is not reached, it increases the quantity of burner air to the burner(s) (4) by a partial quantity of air Δₐᵢᵣ and reduces the quantity of burnout air to the burnout air level(s) (9, 10) by said partial quantity of air Δₐᵢᵣ and wherein, when an upper NOₓ setpoint value in the flue gas is exceeded, it reduces the quantity of burner air to the burner(s) (4) by a partial quantity of air Δₐᵢᵣ and increases the quantity of burnout air to the burnout air level (s) (9, 10) by said quantity of partial air Δₐᵢᵣ,
or an NOₓ regulator (22), which corrects the O₂ setpoint value of the O₂ regulator (21), wherein, when a lower NOₓ setpoint value in the flue gas is not reached, it raises the O₂ setpoint value, and thereby increases the quantity of burner air to the burner(s) (4), and wherein, when an upper NOₓ setpoint value in the flue gas is exceeded, it lowers the O₂ setpoint value, and thereby reduces the quantity of burner air to the burner(s) (4).

8. Arrangement according to Claim 7, **characterized in that** the arrangement comprises a CO regulator (23), which corrects the O₂ setpoint value of the O₂ regulator (21) when the CO setpoint value in the flue gas is exceeded or not reached.

9. Arrangement according to Claim 7, **characterized in that** the arrangement comprises a proportioner (24), which, if there are two burnout air levels (9, 10), divides the reduced or increased partial quantity of air Δₐᵢᵣ between the two burnout air levels (9, 10).

## Revendications

1. Procédé de régulation du débit d'air d'un système de combustion alimenté en combustible fossile solide, le système de combustion comportant une chambre verticale de combustion qui présente au moins un brûleur à poussières de charbon dans la partie inférieure de la chambre de combustion et au moins un niveau d'air de combustion finale dans la partie supérieure de la chambre de combustion traversée du bas vers le haut par les gaz de combustion, le procédé comportant les étapes qui consistent à :
amener un débit d'air de brûleur au brûleur ou aux brûleurs à poussières de charbon et un débit d'air de combustion finale au niveau ou aux niveaux d'air de combustion finale, le débit d'air de brûleur et le débit d'air de combustion finale étant pré-commandés en fonction de la puissance effective de combustion,
corriger par un régulateur d'O₂ le débit d'air de brûleur pré-commandé lorsque la valeur de consigne de l'O₂ dans les gaz de fumée est dépassée ou n'est pas atteinte,
le procédé étant **caractérisé par** les étapes suivantes :
correction du débit d'air de brûleur prédéterminé par le régulateur d'O₂ par un régulateur de NOₓ et, lorsqu'une valeur de consigne inférieure des NOₓ dans les gaz de fumée n'est pas atteinte, augmentation du débit d'air de brûleur vers le ou les brûleurs d'un débit d'air partiel Δ_{luft} et réduction du débit d'air de combustion finale apporté au niveau ou aux niveaux d'air de combustion finale de ce débit partiel d'air Δ_{luft} et, lorsqu'une valeur de consigne supérieure des NOₓ est dépassée dans les gaz de fumée, réduction du débit d'air de brûleur vers le ou les brûleurs d'un débit partiel d'air Δ_{luft} et augmentation du débit d'air de combustion finale apporté au niveau ou aux niveaux d'air de combustion finale de ce débit partiel d'air Δ_{luft} ou
correction de la valeur de consigne de l'O₂ du régulateur d'O₂ par le régulateur de NOₓ et, lorsqu'une valeur de consigne inférieure des NOₓ n'est pas atteinte dans les gaz de fumée, augmentation de la valeur de consigne de l'O₂ et donc augmentation du débit d'air de brûleur apporté au brûleur ou aux brûleurs et, lorsqu'une valeur de consigne supérieure des NOₓ est dépassée dans les gaz de fumée, diminution de la valeur de consigne de O₂ et donc réduction du débit d'air de brûleur apporté au brûleur ou aux brûleurs.

2. Procédé selon la revendication 1, **caractérisé en ce que** la correction de la valeur de consigne de l'O₂ du régulateur d'O₂ s'effectue par un régulateur de CO lorsque la valeur de consigne du CO est dépassée ou n'est pas atteinte dans les gaz de fumée.

3. Procédé selon la revendication 1, **caractérisé en ce que** pour la correction du débit d'air de brûleur prédéterminé par le régulateur d'O₂, la valeur moyenne quotidienne des NOₓ est prise en compte par un régulateur de NO₃.

4. Procédé selon la revendication 1, **caractérisé en ce que** lorsque deux niveaux d'air de combustion finale sont prévus, le débit d'air partiel Δ_{luft} réduit ou augmenté est réparti entre les deux niveaux d'air de combustion finale par un répartiteur.

5. Procédé selon la revendication 4, **caractérisé en ce que** le débit d'air partiel Δ_{luft} réduit ou augmenté peut être réparti dans un rapport de 0 à 100 % entre les deux niveaux d'air de combustion finale.

6. Procédé selon la revendication 1, **caractérisé en ce que** dans la correction du débit d'air de brûleur et du débit d'air de combustion finale par le régulateur de NOₓ ou dans la correction de la valeur de consigne de O₂ du régulateur de O₂ par le régulateur de NOₓ, le régulateur d'O₂ agit en partie aussi sur le débit d'air de combustion finale en plus d'agir sur le débit d'air de brûleur.

7. Ensemble de régulation du débit d'air d'un système de combustion alimenté en combustibles fossiles solides, le système de combustion présentant une chambre verticale de combustion (2) dotée d'au moins un brûleur (4) à poussières de charbon dans la partie inférieure de la chambre de combustion (2) et d'au moins un niveau (9, 10) d'air de combustion finale dans la partie supérieure de la chambre de combustion (2) traversée du bas vers le haut par les gaz de combustion, l'ensemble comportant :
au moins un brûleur (4) de poussières de charbon auquel ou auxquels un débit d'air de brûleur peut être apporté et au moins un niveau (9, 10) d'air de combustion finale auquel ou auxquels un débit d'air de combustion finale peut être apporté, le débit d'air de brûleur et le débit d'air de combustion finale étant pré-commandés en fonction de la puissance effective de combustion,
un régulateur d'O₂ (21) qui corrige le débit pré-commandé d'air de brûleur au cas où la valeur de consigne d'O₂ est dépassée ou n'est pas atteinte dans les gaz de fumée,
l'ensemble étant **caractérisé par** le dispositif suivant :
un régulateur de NOₓ (22) qui corrige le débit d'air de brûleur prédéterminé par le régulateur d'O₂ (21) et qui, lorsqu'une valeur de consigne inférieure des NO₂ n'est pas atteinte dans les gaz de fumée, augmente le débit d'air de brûleur apporté au brûleur ou aux brûleurs (4) d'un débit d'air partiel Δ_{luft} et qui réduit le débit d'air de combustion finale apporté au niveau ou aux niveaux (9, 10) de combustion finale de ce débit partiel d'air Δ_{luft} et qui, lorsqu'une valeur de consigne supérieure des NOₓ est dépassée dans les gaz de fumée, réduit le débit d'air de brûleur apporté au brûleur ou aux brûleurs (4) d'un débit partiel d'air Δ_{luft} et augmente le débit d'air de combustion finale apporté au niveau ou aux niveaux (9, 10) de combustion finale de ce débit partiel d'air Δ_{luft} ou
un régulateur de NOₓ (22) qui corrige la valeur de consigne de l'O₂ du régulateur d'O₂ (21) et qui, lorsqu'une valeur de consigne inférieure des NOₓ n'est pas atteinte dans les gaz de fumée, relève la valeur de consigne de l'O₂ et augmente donc le débit d'air de brûleur apporté au brûleur ou aux brûleurs (4) et qui, lorsqu'une valeur de consigne supérieure des NOₓ est dépassée dans les gaz de fumée, diminue la valeur de consigne de l'O₂ et réduit donc le débit d'air de brûleur apporté au brûleur ou aux brûleurs (4).

8. Ensemble selon la revendication 7, **caractérisé en ce que** l'ensemble comporte un régulateur de CO (23) qui corrige la valeur de consigne de O₂ du régulateur de O₂ (21) lorsque la valeur de consigne de CO est dépassée ou n'est pas atteinte dans les gaz de fumée.

9. Ensemble selon la revendication 7, **caractérisé en ce que** l'ensemble comporte un répartiteur (24) qui, lorsque deux niveaux (9, 10) d'air de combustion finale sont présents, répartit le débit d'air partiel Δ_{luft} réduit ou augmenté entre les deux niveaux (9, 10) d'air de combustion finale.
